# EUROPEAN PATENT APPLICATION

(11) **EP 4 686 062 A1**
(43) Date of publication of application: **28.01.2026**
(21) Application number: 24189997.0
(22) Date of filing: 22.07.2024
(51) Int. Cl.: H02M 1/12, H02M 1/42, H02M 7/5395, H02M 7/487

(54) **VIENNA RECTIFIER WITH CARRIER PWM AND COMMON MODE INJECTION TO COMPENSATE MINIMUM OFF TIMES**

(71) Applicant: Vestel Elektronik Sanayi ve Ticaret A.S., 45030 Manisa (TR)
(72) Inventor: Yildirim, Seyit, 45030 Manisa (TR)
(74) Representative: Hoffmann Eitle

(57) **Abstract**

According to the invention, there is provided a pulse width modulation, PWM, rectifier and corresponding control method. The PWM rectifier including a multiple-phase rectifier circuit configured to rectify an alternating current, AC, input voltage; a switching circuit configured to control a multiple-level direct current, DC, output voltage, the switching circuit comprising at least one switch with a minimum turn-off time; and a control unit configured to generate a pulse width modulation, PWM, signal switching the switching circuit on and off at a switching frequency the switching circuit at a switching frequency, wherein the control unit is configured to set the PWM signal to a maximum or minimum level, if the switching circuit is switching on and off in a time period less than the minimum turn-off time

## Description

### Background

In power electronics, the conversion of three-phase AC power to DC power is a requirement for various applications, including telecommunications equipment, data centers, and industrial motor drives. Traditionally, this conversion has been accomplished using rectifiers such as a six-pulse and twelve-pulse rectifier. However, these conventional rectifiers often introduce significant harmonic distortion and exhibit poor power factor, leading to inefficient power utilization and necessitating extensive filtering measures.

Therefore, there is a need to provide a rectifier and a corresponding control method solving the above problems.

### Summary of the Invention

In view of the above problems the present invention provides a pulse width modulation, PWM, rectifier and corresponding control method according to the independent claims.

The PWM rectifier according to the invention includes a multiple-phase rectifier circuit that rectifies an alternating current, AC, input voltage; a switching circuit that controls a multiple-level direct current, DC, output voltage, the switching circuit comprising at least one switch with a minimum turn-off time; and a control unit that generates a pulse width modulation, PWM, signal switching the switching circuit on and off at a switching frequency the switching circuit at a switching frequency, wherein the control unit sets the PWM signal to a maximum or minimum level, if the switching circuit is switching on and off in a time period less than the minimum turn-off time.

Accordingly, harmonic generation will be prevented since no amplitude difference will occur between the phases.

### Brief Description of Drawings

Fig. 1 describes a PWM duty clamping method according to the prior art.
Fig. 2 describes a PWM duty clamp injection method according to the invention.
Fig. 3 describes a simulated transition moment and a change in the current signals.
Fig. 4 illustrates a comparative harmonic analysis.

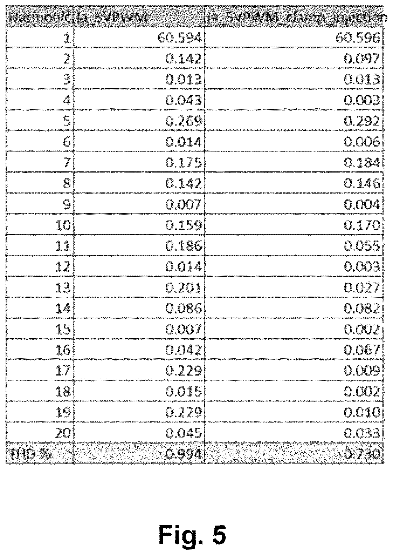

Fig. 5 describes a harmonic performance according to the invention and a harmonic performance according to the prior art.

### Detailed Description of Embodiments

Harmonic distortion in power systems refers to deviations from the ideal sinusoidal waveform of current or voltage due to the presence of frequencies that are multiples of the fundamental frequency. These harmonics are introduced during the rectification process, where the alternating current, AC, waveform is converted to a direct current, DC, waveform. In traditional rectifiers, the process of switching and the inherent characteristics of the components used generate these additional frequencies.

The presence of harmonics in power systems can cause many problems. Harmonics result in increased heating in electrical equipment, which can shorten the lifespan of motors, transformers, and capacitors. This overheating is due to the additional current caused by harmonics, which increases losses in conductors and magnetic cores of devices. Furthermore, harmonic distortion can lead to electromagnetic interference, which can affect the operation of sensitive electronic equipment, causing malfunction or damage. Another critical issue is the reduction in overall system efficiency. Harmonics cause additional power losses, especially in conductors and transformers, which can lead to increased energy consumption and higher operational costs.

Additionally, the presence of harmonics can cause resonant conditions in power systems, leading to dangerously high voltages and currents that can damage equipment and pose safety risks.

To overcome these problems a Vienna rectifier is used for instance incorporating a three-level topology. This design produces three distinct voltage levels: positive, zero, and negative. The three-level structure significantly reduces the voltage stress on individual components, enhancing overall efficiency and minimizing harmonic distortion. These characteristics make the Vienna rectifier particularly advantageous for applications demanding high-quality DC power.

Traditional rectifiers face several challenges. They generate substantial harmonic currents, which can cause issues such as overheating, electromagnetic interference, EMI, and decreased efficiency in power systems. The mitigation of these harmonics typically requires extensive and costly filtering. Furthermore, many conventional rectifiers suffer from low power factor, indicating inefficient power usage and leading to increased reactive power and higher operational losses in the power distribution system. Additionally, the high voltage stress on components like diodes and switches in two-level rectifiers contributes to higher failure rates and reduced component lifespan.

The Vienna rectifier produces lower harmonic currents and results in a cleaner power supply with reduced filtering requirements. Its capability for power factor correction allows it to align the input current with the voltage, thus reducing reactive power and enhancing overall efficiency. The three-level topology reduces voltage stress on components, improving reliability and extending their operational life. These factors contribute to higher efficiency due to lower switching losses and reduced harmonic distortion, making the Vienna rectifier highly suitable for high-power applications.

Despite these advantages, there is the need for further improvements in the traditional Vienna rectifier to meet the evolving demands of many applications. There is a need for an improved control algorithm capable of dynamically adjusting to varying load conditions and optimizing the rectifiers performance.

Moreover, while the Vienna rectifier is typically utilized in three-phase systems, extending its design to multi-phase systems is of growing interest. This extension could benefit applications requiring higher power and greater efficiency. The present invention aims to address these needs by introducing advanced control algorithms.

The present invention discloses in a particular embodiment a specific modulation and control strategy for the Vienna rectifier and addresses the challenges associated with minimum turn-off times of switches and nonlinear adjustments to a duty cycle. The duty cycle is a parameter that defines the fraction of time during which a switch, such as a transistor, Metal Oxide Semiconductor Field-Effect Transistor, MOSFET, or Insulated-Gate Bipolar Transistor, IGBT, is turned on within a given period. It controls the amount of power delivered to a load, thereby regulating the average output voltage or current converters, inverters, and other switch-mode power supplies. The duty cycle is typically expressed as a percentage or a fraction and represents the ratio of the on time of the switch to the total period of the switching cycle.

The aim of the invention is to reduce harmonic generation and maintain stable operation in the power electronics system using PWM signals, and ensure synchronized phase modulation for effective harmonic suppression.

According to one embodiment of the invention, the control unit may use a carrier signal at the switching frequency with a triangular waveform and compare the carrier signal with a modulation signal to generate the PWM signal.

According to one embodiment of the invention, the control unit may apply the minimum or maximum level to the modulation signals of all phases at the same time.

According to one embodiment of the invention, the PWM signal may be added to a modulation signal controlling the switching circuit.

According to one embodiment of the invention, the pulse width modulation rectifier may be a Vienna rectifier.

The invention further provides a control method of a pulse width modulation rectifier, a computer program, and a computer-readable medium.

These enhancements result in a PWM rectifier that is more efficient, reliable, versatile, and capable of meeting the demands of modern high-power applications.

When an turn-on command is sent from a control unit such as a microcontroller to switches such as MOSFETs or IGBTs they are turned on after a certain period of time. Similarly, when a turn off command is sent, they are turned off after a certain period of time. This is a hardware limit.

Therefore, in applications such as a Vienna Rectifier, if a duty value is calculated less than the minimum turn-on time determined according to this hardware limit, this duty value is updated as 0 so that no PWM signal is generated.

Similarly, if the turn off time is less than the minimum turn off time, this duty value is updated as 1 to ensure that the switching element is fully open during that period.

These nonlinear duty changes occurring in the above regions cause distortions in the current signal and strengthen undesired harmonic signals.

In a Vienna rectifier topology according to one embodiment of the invention, a carrier signal is used at a switching frequency with a triangular waveform between +1 and -1 to generate PWM signals, where modulation signals are at a main frequency. The carrier signal refers to a high-frequency signal typically used in conjunction with pulse width modulation, PWM, techniques to control the switching of semiconductor devices such as IGBTs or MOSFETs and determines the frequency at which the switches such as IGBTs or MOSFETs in a Vienna rectifier turn on and off. Modulating the width of pulses in the carrier signal, PWM allows for precise control over the voltage output. This control can minimize harmonic distortion in the output waveform, which is crucial for maintaining power quality and efficiency in AC-DC conversion. By comparing the modulation signals with the carrier signal, PWM signals are produced.

Regarding modulation, the width of the pulses in the carrier signal is modulated according to the desired output voltage or current. This modulation is controlled by feedback signals from the output side of the rectifier, ensuring precise regulation under varying load conditions.

Moreover, in multi-phase Vienna rectifiers, multiple carrier signals may be synchronized to ensure proper phase alignment and minimize switching losses across phases.

If the modulation signal is +1 or -1, it means 0% duty. If the modulation signal is 0, it means 100% duty.

As an illustrative example, a system is considered where the minimum turn-off time of the switches corresponds to a duty value of 7%. When the modulation signal calculated for a phase A is 0.04, since there is not enough time for the switch to close, this modulation value is set to 0. That is, the duty value is set to 100%, so that the switch of this phase remains open continuously. The duty value to be applied according to the account was actually 96%. However, this value is set to 100% with the addition of 4%. That is, there is a 4% nonlinear change in this phase.

In multi-phase Vienna rectifiers, such as three-phase or six-phase configurations, each phase of the AC input is rectified separately. Each phase has its own set of rectifying switches such as IGBTs or MOSFETs that are controlled by their respective PWM signals.

To ensure proper operation and minimize switching losses across phases, it is crucial that the carrier signals used for PWM control in each phase are synchronized. Synchronization ensures that the switching of rectifying devices across different phases occurs at the same points in time relative to the AC input waveform.

According to the invention, the same amount of nonlineasr change is applied to the modulation signals of the other phases at the same time. Therefore, harmonic generation will be prevented since no amplitude difference occurs between the phases.

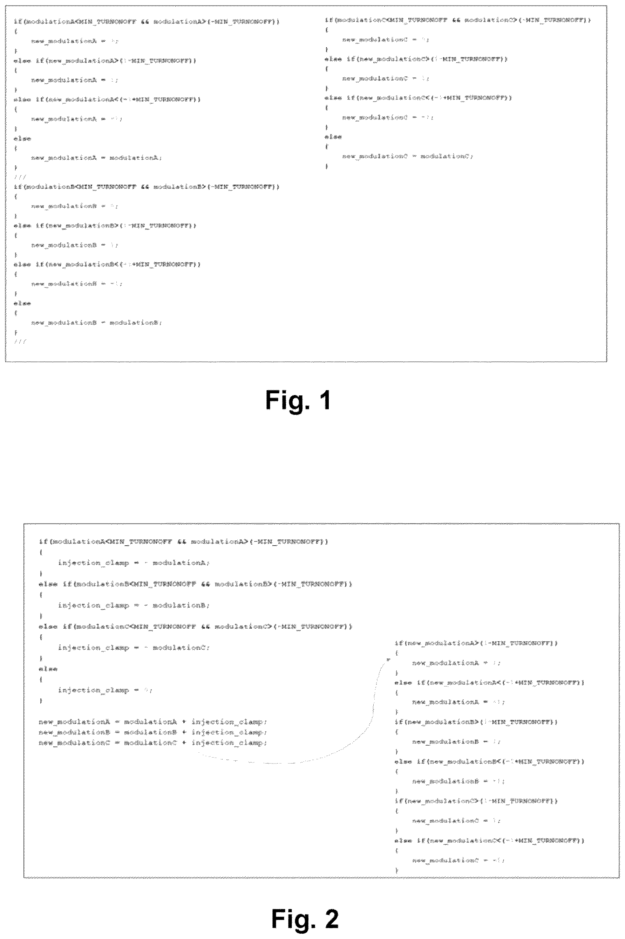

In Fig. 1, a commonly used PWM duty clamping method is shown. The PWM duty clamping method is a technique used in power electronics to control the duty cycle of PWM signals. This method ensures that the duty cycle of the PWM signal remains within a specified range. In some applications, it is critical to restrict the duty cycle within a specific range to prevent over-voltage, over-current, or other operational limits that could potentially damage components or disrupt operation. For instance, in motor control applications, exceeding the maximum duty cycle could lead to excessive motor speed or torque, which may not be suitable for the mechanical system.

PWM duty clamping may involve incorporating voltage clamping circuits that limit the maximum voltage level of the PWM signal. In applications where current control is crucial, current limiting circuits can be integrated to monitor and regulate the current flow through the load.

PWM controllers may include built-in algorithms or software routines that monitor and adjust the duty cycle based on real-time feedback from sensors or load conditions. This software-based approach allows for dynamic adjustment of the duty cycle to optimize performance while ensuring safe operation.

In Fig. 2, the PWM duty clamp injection method according to the invention is shown. An aspect of a Vienna rectifier is its integrated clamp injection circuit. Traditionally, rectifiers have employed passive components like resistors and diodes for voltage clamping purposes. In contrast, the clamp injection circuit in the Vienna rectifier utilizes active components such as additional diodes and capacitors strategically placed across semiconductor switches. This configuration allows for dynamic voltage clamping, providing robust protection against voltage spikes and over-voltage conditions.

The clamp injection circuit enhances the reliability and longevity of the Vienna rectifier by effectively managing voltage fluctuations during operation. By limiting voltage excursions, it minimizes stress on semiconductor switches, reducing the likelihood of premature failure and enhancing overall system reliability. This innovation is crucial in high-power applications where maintaining stable operation and protecting components from transient voltage events are paramount.

According to the invention the control unit sets the PWM signal to a maximum or minimum level, if the switching circuit is switching on and off in a time period less than the minimum turn-off time, and may apply the minimum or maximum level to the modulation signals of all phases at the same time.

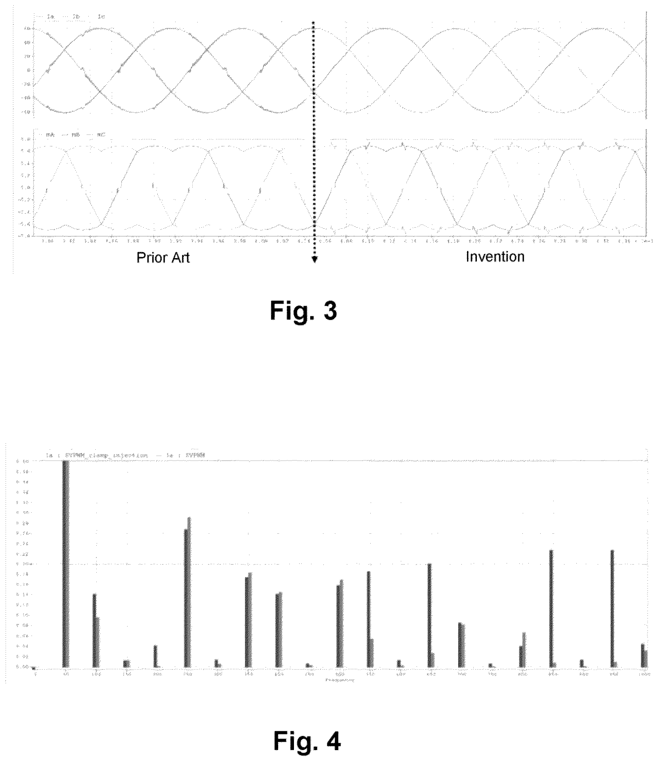

In Fig. 3, the simulated transition moment of the application of the method to the modulation signals and the change in the current signals are shown. As can be seen in Fig. 3, the distortions in the current signal are considerably reduced.

As shown in Fig. 4, this can also be seen in harmonic analysis. A comparative harmonic analysis is shown in Fig. 4.

As can be seen from the results, the harmonic performance improves and an electromagnetic compatibility, EMC, performance increases according to the invention.

This application is not limited to the embodiments described herein. The scope of the invention as defined in the claims encompasses other variations and modifications apparent to those skilled in the art.

## Claims

1. A pulse width modulation rectifier including
a multiple-phase rectifier circuit configured to rectify an alternating current, AC, input voltage;
a switching circuit configured to control a multiple-level direct current, DC, output voltage, the switching circuit comprising at least one switch with a minimum turn-off time; and
a control unit configured to generate a pulse width modulation, PWM, signal switching the switching circuit on and off at a switching frequency;
wherein the control unit is configured to set the PWM signal to a maximum or minimum level, if the switching circuit is switching on and off in a time period less than the minimum turn-off time.

2. The pulse width modulation rectifier according to claim 1, wherein the control unit is configured to use a carrier signal at the switching frequency with a triangular waveform and to compare the carrier signal with a modulation signal to generate the Pulse Width Modulation signal.

3. The pulse width modulation rectifier according to claims 1 or 2, wherein the control unit is configured to apply the minimum or maximum level to the modulation signals of all phases at the same time.

4. The pulse width modulation rectifier according to claims 1 to 3, wherein the PWM signal is added to a modulation signal controlling the switching circuit.

5. The pulse width modulation rectifier according to claims 1 to 4, wherein the pulse width modulation rectifier is a Vienna rectifier.

6. A control method of a pulse width modulation rectifier comprising the following steps:
rectifying an alternating current, AC, input voltage, using a multiple-phase rectifier circuit;
controlling a three-level direct current, DC, output voltage using a switching circuit comprising at least one switch with a minimum turn-off time; and
generating a pulse width modulation, PWM, signal switching the switching circuit on and off at a switching frequency, using a control unit; and
setting the PWM signal to a maximum or minimum level, if the switching circuit is switching on and off in a time period less than the minimum turn-off time.

7. A computer program comprising instructions to cause the pulse width modulation rectifier of claim 1 to execute the steps of the controlling method of claim 6.

8. A computer-readable medium having stored thereon the computer program of claim 7.
